# EUROPÄISCHE PATENTANMELDUNG

(11) **EP 3 260 749 A1**
(43) Veröffentlichungstag der Anmeldung: **27.12.2017**
(21) Anmeldenummer: 17175999.6
(22) Anmeldetag: 14.06.2017
(51) Int. Cl.: F16K 17/194

(54) **VORRICHTUNG ZUM AUSGLEICH VON ÜBERDRUCK UND UNTERDRUCK BEI SPEICHERANLAGEN FÜR ORGANISCHE GASE**

(30) Priorität: 14.06.2016 DE 202016103136 U
(71) Anmelder: Neitzel, Stephan, 27777 Ganderkesee (DE)
(72) Erfinder: Neitzel, Stephan, 27777 Ganderkesee (DE)
(74) Vertreter: Jabbusch, Matthias

(57) **Zusammenfassung**

Die Erfindung betrifft eine Vorrichtung zur Druckregulierung, insbesondere zur selbsttätigen Überdruck- und Unterdrucksicherung, eines geschlossenen Systems, insbesondere einer Biogasanlage, umfassend wenigstens eine erste, druckseitige Kammer, die wenigstens eine Anschlussöffnung zu dem geschlossenen System aufweist, und eine zweite, umgebungsseitige Kammer mit wenigstens einer Atmosphärenöffnung, welche aus der zweiten Kammer nach außen führt. Diese Vorrichtung zeichnet sich dadurch aus, dass die erste Kammer und die zweite Kammer über wenigstens eine Einlasseinrichtung und wenigstens eine Auslasseinrichtung miteinander verbunden sind. Weiter ist vorgesehen, dass die Einlasseinrichtung und die Auslasseinrichtung jeweils wenigstens ein Absperrorgan aufweisen, mit dem jeweils wenigstens eine Durchlassöffnung der Einlasseinrichtung und wenigstens eine Durchlassöffnung der Auslasseinrichtung zwischen den Kammern verschließbar ist.

## Beschreibung

Die Erfindung betrifft eine Vorrichtung zur Druckregulierung, insbesondere zur selbsttätigen Überdruck- und Unterdrucksicherung, eines geschlossenen Systems, insbesondere einer Biogasanlage, umfassend wenigstens eine erste, druckseitige Kammer, die wenigstens eine Anschlussöffnung zu dem geschlossenen System aufweist, und eine zweite, umgebungsseitige Kammer mit wenigstens einer Atmosphärenöffnung, welche aus der zweiten Kammer nach außen führt.

Vorrichtungen zur Druckregulierung, insbesondere Überdruck- und Unterdrucksicherungen, werden unter anderem in Biogasanlagen eingesetzt, um einem unzulässig hohen Druckaufbau in Gärbehältern entgegenzuwirken, beispielsweise wenn nicht genügend Gaslagervolumen vorhanden ist oder produziertes Biogas nicht in einem Blockheizkraftwerk der Biogasanlage umgesetzt werden kann. Steigt der Druck innerhalb des ein geschlossenes System ausbildenden Gärbehälters über einen bestimmten Wert, wird über die Atmosphärenöffnung der Vorrichtung zur Druckregulierung Biogas an die Atmosphäre abgegeben. Beschädigungen an zum Beispiel Foliendächern der Gärbehälter können so effektiv verhindert werden.

Aus dem Stand der Technik bekannte Vorrichtungen zur Druckregulierung basieren häufig auf zwei unterschiedlichen Systemen. Dies sind einerseits Wassertassen-Überdrucksicherungen und andererseits Überdrucksicherungen mit Verdrängungskörper. Die Überdrucksicherungen mit Verdrängungskörper können bei Gärbehältern mit Foliendach eingesetzt werden, wobei der Gasdruck innerhalb des Gärbehälters über die Ausdehnung des Foliendachs bestimmbar ist. Die Ausdehnung des Foliendaches führt dann dazu, dass der Verdrängungskörper aus einem Wasser-Glykolgemisch herausgehoben wird, wodurch eine Verbindung zum Gärbehälterinneren freigegeben wird, über die Biogas aus dem geschlossenen System entweichen kann.

Die Wassertassen-Überdrucksicherungen basieren auf Tauchtassen, die bei Erreichen eines bestimmten Gasdrucks in einer ersten, druckseitigen, mit dem geschlossenen System in Verbindung stehenden Kammer unterhalb der Tauchtasse angehoben werden. Die angehobene Tauchtasse gibt dann einen Weg frei, über den das Biogas in die Atmosphäre entweichen kann, bis sich der Gasdruck innerhalb des geschlossenen Systems wieder auf ein bestimmtes Niveau gesenkt hat. Häufig ist die Tauchtasse dabei in einer zweiten, umgebungsseitigen Kammer angeordnet, die eine Öffnung zur Atmosphäre hin aufweist. Neben einer Regulierung von Überdruck ermöglichen Wassertassen-Überdrucksicherungen auch eine Unterdrucksicherung, in dem eine weitere Tauchtasse vorgesehen ist, die innerhalb der ersten, druckseitigen Kammer angeordnet ist und bei einem Druck innerhalb der ersten Kammer unterhalb des Atmosphärendrucks angehoben wird, wodurch ein Druckausgleich zwischen Atmosphäre und erster Kammer ermöglicht ist.

Nachteilig bei allen diesen Vorrichtungen zur Druckregulierung ist, dass diese mit Wasser oder Wasser-Glykolgemischen funktionieren, die temperaturabhängig sind und je nach Zusammensetzung andere Kennlinien aufweisen. Auch besteht die Gefahr des Einfrierens, wenn die Wasser-Glykol-Mischung nicht den Vorgaben entspricht. Daraus resultiert relativ hoher Aufwand hinsichtlich Prüfung und Unterhaltung dieser Vorrichtungen zur Druckregulierung.

Aufgabe der Erfindung ist es eine Vorrichtung zur Druckregulierung bereitzustellen, die mit weniger Aufwand betrieben werden kann und eine hohe Betriebssicherheit aufweist.

Die Vorrichtung zur Druckregulierung, insbesondere zur selbsttätigen Überdruck- und Unterdrucksicherung, eines geschlossenen Systems, insbesondere einer Biogasanlage, umfassend wenigstens eine erste, druckseitige Kammer, die wenigstens eine Anschlussöffnung zu dem geschlossenen System aufweist, und eine zweite, umgebungsseitige Kammer mit wenigstens einer Atmosphärenöffnung, welche aus der zweiten Kammer nach außen führt, zeichnet sich erfindungsgemäß dadurch aus, dass die erste Kammer und die zweite Kammer über wenigstens eine Einlasseinrichtung und wenigstens eine Auslasseinrichtung miteinander verbunden sind, insbesondere miteinander kommunizierend verbunden sind, und dass die Einlasseinrichtung und die Auslasseinrichtung jeweils wenigstens ein Absperrorgan aufweisen, mit dem jeweils wenigstens eine Durchlassöffnung der Einlasseinrichtung und wenigstens eine Durchlassöffnung der Auslasseinrichtung zwischen den Kammern verschließbar ist. Die Absperrorgane der Einlasseinrichtung und der Auslasseinrichtung sind dabei derart gestaltet, dass diese aufgrund von deren Gewicht die Durchlassöffnungen versperren, ohne dass Wasser oder Wasser-Glykolgemische eingesetzt werden und die Funktionsweise entgegen den bekannten Überdruck- beziehungsweise Unterdrucksicherungen damit nicht temperaturabhängig und weniger wartungsintensiv ist.

Um ein an einen jeweils vorgesehenen Betriebsdruck innerhalb des geschlossenen Systems angepasstes Gewicht der Absperrorgane zu erreichen, kann wenigstens eines dieser gewichtsbelastet sein, insbesondere sind sowohl die Absperrorgane von der Einlasseinrichtung als auch von der Auslasseinrichtung gewichtsbelastet. Gewichtsbelastet umfasst dabei sämtliche Formen und Möglichkeiten die Absperrorgane zu beschweren, beispielsweise durch zusätzliche Gewichte, und so deren Gewicht zu erhöhen. Eine Angleichung des Gewichts der Absperrorgane oder auf die Absperrorgane an unterschiedliche Betriebsdrücke kann dadurch erreicht werden, dass der Einlasseinrichtung oder der Auslasseinrichtung oder der Einlasseinrichtung und der Auslasseinrichtung zugeordnete Gewichte austauschbar sind.

Sowohl die Einlasseinrichtung als auch die Auslasseinrichtung weisen in weiterer Ausgestaltung der Erfindung jeweils wenigstens ein Gestänge auf, an dem das jeweilige Absperrorgan gehalten ist. Durch die Gestänge sind die Absperrorgane lagegenau in oder auf der jeweiligen Durchlassöffnung positioniert und werden nach einem Überdruck- oder unterdruckbedingten Freigeben wenigstens einer der Durchlassöffnungen in ihre, die Durchlassöffnung verschließende Ausgangsposition zurückbewegt. Die Gestänge sind dazu vorteilhafterweise drehgelenkig um eine Drehachse pendelnd in der Vorrichtung gelagert, so dass die Absperrorgane immer auf einer vorbestimmten Kreisbahn bewegt werden. Besonders einfach gestaltete und kompakte Gestänge können vorgesehen sein, wenn die Absperrorgane jeweils an den pendelnden Enden der Gestänge mit den jeweiligen Gestängen verbunden sind.

Damit die Absperrorgane auch bei drehgelenkig um eine Drehachse pendelnd in der Vorrichtung gelagerten Gestängen korrekt und lagegenau in oder auf die Durchlassöffnungen, diese verschließend, einsetzbar sind, können die Absperrorgane kardanisch an dem jeweiligen Gestänge aufgehängt sein. Unabhängig von deren jeweiliger Lage richten sich die Absperrorgane dann immer in vorbestimmter Weise aus und setzen parallel auf den Durchlassöffnungen auf, insbesondere parallel zu der Trennwand auf den Durchlassöffnungen auf. Eine gleichmäßige Ausrichtung der Absperrorgane kann zudem dadurch unterstützt sein, dass die Gestänge mittig an die Absperrorgane angreifend mit diesen verbunden sind.

In weiterer Ausgestaltung können die Kammern, insbesondere die erste Kammer und die zweite Kammer, übereinander angeordnet sein und die Gestänge der Einlasseinrichtung und der Auslasseinrichtung oberhalb einer die Durchlassöffnungen aufweisenden Trennwand zwischen den Kammern angeordnet sein. Eine entsprechende Anordnung der Gestänge ermöglicht auf besonders einfache Weise das Austauschen von Gewichten und somit eine Anpassung an andere Betriebsdrücke, indem der Einlasseinrichtung und der Auslasseinrichtung zugeordnete Gewichte in entsprechende Gewichtaufnahmen oder Gewichtaufnahmeabschnitte der Gestänge eingesetzt werden, insbesondere auf entsprechende Gewichtaufnahmen oder Gewichtaufnahmeabschnitte aufgeschoben werden.

Durch die Trennwand zwischen den Kammern der Vorrichtung sind die Kammern fluiddicht, entsprechend einem Fluid, welches aus dem geschlossenen System entweichen könnte, beispielsweise Biogas, voneinander abgetrennt. Um ein entweichen von Fluid aus dem geschlossenen System an anderer Stelle der Vorrichtung zu verhindern, sind die Kammern der Vorrichtung vorteilhafterweise in einem fluiddichten Gehäuse, insbesondere gasdichten Gehäuse, aufgenommen. Insbesondere ist wenigstens die erste, druckseitige Kammer gasdicht zur Atmosphäre hin abgedichtet.

Alternativ können die Gestänge bei übereinander angeordneten Kammern natürlich auch unterhalb einer die Durchlassöffnungen aufweisenden Trennwand zwischen den Kammern angeordnet sein. Zudem sind auch Mischformen von oberhalb und unterhalb der Trennwand angeordneten Gestängen möglich, bei denen eines der Gestänge, das heißt entweder das Gestänge der Auslasseinrichtung oder das Gestänge der Einlasseinrichtung, unterhalb der Trennwand angeordnet ist und das jeweils andere Gestänge oberhalb der Trennwand angeordnet ist.

Die Anordnung von den Absperrorganen zugeordneten Gewichten kann gemäß einer ersten Ausführung der Erfindung so sein, dass ein der Auslasseinrichtung zugeordnetes Gewicht an dem pendelnden Ende des Gestänges mit dem Absperrorgan angeordnet ist. Dass der Auslasseinrichtung zugeordnete Absperrorgan öffnet somit in Richtung der dem Gewicht und Gestänge gegenüberliegenden Seite. Ein der Einlasseinrichtung zugeordnetes Gewicht ist dann an einem dem pendelnden Ende mit dem Absperrorgan gegenüberliegenden anderen pendelnden Ende des Gestänges angeordnet. Dass der Einlasseinrichtung zugeordnetes Absperrorgan öffnet dann in Richtung Gestänge. Mit einer entsprechenden Anordnung der Gewichte von Einlasseinrichtung und Auslasseinrichtung ist auf einfache Weise erreicht, dass die den jeweiligen Absperrorganen von Einlasseinrichtung und Auslasseinrichtung zugeordneten Gewichte in entgegengesetzter Richtung wirken, d.h., dass bei Überdruck beziehungsweise Unterdruck jeweils nur die Durchlassöffnung der Einlasseinrichtung oder die Durchlassöffnung der Auslasseinrichtung freigegeben wird.

Gemäß einer zweiten Ausführung der Erfindung können die Gewichte genau umgekehrt angeordnet sein, wobei dann ein der Einlasseinrichtung zugeordnetes Gewicht an dem pendelnden Ende des Gestänges mit dem Absperrorgan angeordnet ist und ein der Auslasseinrichtung zugeordnetes Gewicht an einem dem pendelnden Ende mit dem Absperrorgan gegenüberliegenden anderen pendelnden Ende des Gestänges angeordnet ist. Die Absperrorgane und Gewichte von der Einlasseinrichtung und der Auslasseinrichtung sind dann gegenüber der ersten Ausführung vertauscht, so dass die Absperrorgane die Durchlassöffnungen bei umgekehrten Druckverhältnissen freigegeben und in entgegengesetzter Richtung zu der ersten Ausführung öffnen.

Während sowohl die erste Ausführung als auch die zweite Ausführung jeweils Anordnungen der Gestänge von Einlasseinrichtung und Auslasseinrichtung beschreiben die auf einer Seite der Trennwand zwischen den Kammern ausgebildet sind, wobei die Gestänge in bevorzugter Ausgestaltung oberhalb der Trennwand oder auch unterhalb der Trennwand angeordnet sind, können bei Mischformen mit oberhalb und unterhalb der Trennwand angeordneten Gestängen auch andere Anordnungen der den Absperrorganen zugeordneten Gewichte vorgesehen sein. Beispielsweise können dann sowohl dass der Auslasseinrichtung als auch das der Einlasseinrichtung zugeordnete Gewicht an einem dem jeweiligen pendelnden Ende mit dem Absperrorgan gegenüberliegenden anderen pendelnden Ende des jeweiligen Gestänges angeordnet sein oder das der Einlasseinrichtung und das der Auslasseinrichtung zugeordnete Gewicht ist jeweils an dem pendelnden Ende des Gestänges mit dem Absperrorgan angeordnet.

Weiterhin kann die erste, druckseitige Kammer unterhalb der zweiten, umgebungsseitigen Kammer angeordnet sein. Aus dem geschlossenen System, insbesondere der Biogasanlage, insbesondere einem Gärbehälter der Biogasanlage, insbesondere einem Gasspeicher, bei Überdruck entweichendes Fluid, insbesondere Biogas, kann so auf einfache Weise über die Atmosphärenöffnung nach oben abgeführt werden. Bei oberhalb der ersten, druckseitigen Kammer angeordneter zweiter, umgebungsseitiger Kammer kann, insbesondere bei Verwendung der Vorrichtung in Kombination mit einer Biogasanlage, zudem eine durch einen Temperaturgradienten bedingte Strömung innerhalb der ersten, druckseitigen Kammer ausgenutzt werden, wobei warmes Biogas im oberen Bereich der ersten, druckseitigen Kammer an der Trennwand entlangströmt und so die Absperrorgane bei kalten Umgebungstemperaturen nicht festfrieren. Indem der zweiten, umgebungsseitigen Kammer ein Kondensatablauf zugeordnet ist, der ein durch die erste, druckseitige Kammer geführtes Ablaufrohr umfasst, wird auf einfache Weise auch der Kondensatablauf durch warmes Biogas beheizt, so dass auch dieser bei niedrigen Temperaturen nicht zufriert. Sich möglicherweise in der zweiten, umgebungsseitigen Kammer sammelndes Kondensat kann so jederzeit sicher ablaufen.

Je nach aus dem geschlossenen System entweichendem Fluid kann auch eine Anordnung der Kammern vorgesehen sein, bei der die erste, druckseitige Kammer oberhalb der zweiten, umgebungsseitigen Kammer angeordnet ist.

Um eine bei vorbestimmtem Betriebsdruck sichere Abdichtung zwischen der druckseitigen und umgebungsseitigen Kammer der Vorrichtung zu erreichen, können die Absperrorgane in den Durchlassöffnungen in Dichtsitzen geführt sein, die wenigstens einen Vorsprung aufweisen, der an seiner dem Absperrorgan zugewandten Seite einen Anlagebereich für das jeweilige Absperrorgan ausbildet. Der jeweilige Vorsprung an den Dichtsitzen verhindert, dass die Absperrorgane durch ihr Gewicht durch die Durchlassöffnungen durchgedrückt werden und hält diese in vorbestimmter Position. Insbesondere ist der jeweilige Vorsprung der Dichtsitze in den Durchlassöffnungen dabei umlaufend an dem Rand der jeweiligen Durchlassöffnung ausgebildet. Weiter kann der Vorsprung unter anderem auch als eine konische Verengung des Dichtsitzes in der Durchlassöffnung ausgebildet, an dessen Form das jeweilige Absperrorgan angepasst ist. Ein bevorzugtes Material für die Absperrorgane, insbesondere bei solchen Absperrorganen, die in den Durchlassöffnungen in Dichtsitzen geführt sind, ist Teflon, da dieses nicht anfriert und so ein hohes Maß an Frostsicherheit bedingt.

Gemäß einer alternativen Ausführung liegen die Absperrorgane auf den Dichtsitzen auf. Um bei auf den Dichtsitzen aufliegenden Absperrorganen eine gute Abdichtung mit hoher Genauigkeit zu gewährleisten sind die Absperrorgane dann vorteilhafterweise aus einem eindrückbaren Material gefertigt, insbesondere einem geschlossenporigen Schaum, beispielsweise Moosgummi oder Fluorkautschukschaum, insbesondere Fluorkautschukschaum mit einer Shore-Härte zwischen 10 und 15, der sich unter anderem dadurch auszeichnet kein Wasser aufzunehmen. Je nach Steifigkeit des Materials der Absperrorgane können diese als Sandwichbauteil ausgebildet sein, wobei das abdichtende, flexible Material zwischen Lagen eines formstabilen Materials eingelegt ist oder an wenigstens eine Lage des formstabilen Materials angelegt ist, beispielsweise einem metallischen Werkstoff. Das die Durchlassöffnung abdichtende, flexible Material kann dann in weiterer Ausgestaltung mit nur einem Randbereich gegenüber dem formstabilen Material hervorstehen. Weiterhin kann der jeweilige Dichtsitz auf der dem Absperrorgan zugewandten Seite ein erhabenes Profil, insbesondere eine Kammdichtung, aufweisen, an welches sich das Absperrorgan beim Schließen der Durchlassöffnung angelegt.

Bei Vorrichtungen ohne Dichtsitzen in den Durchlassöffnungen können entsprechende Vorsprünge auch anderweitig ausgebildet sein.

Vorteilhafterweise weisen dabei alle Absperrorgane, Durchlassöffnungen und Dichtsitze gleiche Abmessungen auf, so dass weniger Ersatzteile vorgehalten werden müssen. Geeignete Absperrorgane sind beispielsweise scheibenartige Verschlüsse, die ähnlich einer Ventilklappe ausgebildet sein können. Bei der Auswahl der Materialien für die Vorrichtung, ist weiter darauf zu achten, dass diese vorteilhafterweise einen explosionsgeschützten Betrieb bzw. eine explosionsgeschützte Bauweise ermöglichen. Dazu werden insbesondere für Dichtsitz und Absperrorgan Materialien mit einer elektrischen Leitfähigkeit entsprechend den einschlägigen Verordnungen verwendet.

Indem die Gestänge, insbesondere bei auf einer Seite der Trennwand angeordneten Gestängen, ineinandergreifend mit deren Schwenkradien überlappend angeordnet sind, ist eine besonders kompakte Bauform der Vorrichtung realisierbar, die einen gegenüber nebeneinander angeordneten Gestängen geringen Raumbedarf aufweist. Die jeweiligen Drehachsen der Gestänge können dabei seitlich zu der dem jeweils anderen Gestänge zugeordneten Durchlassöffnung über Befestigungswinkel an der Trennwand gehalten sein, so dass die Trennwand mit der Einlasseinrichtung und Auslasseinrichtung auf einfache Weise als fertige Baugruppe in die restliche Vorrichtung, insbesondere ein Gehäuse der Vorrichtung, eingesetzt beziehungsweise eingebaut werden kann. In Draufsicht auf die Trennwand kann ein erstes Gestänge der Einlasseinrichtung oder der Auslasseinrichtung dabei eine U-Form aufweisen, während das zweite Gestänge, das der jeweils anderen Einrichtung zugeordnet ist, eine T-Form aufweisen kann. Das T-förmige Gestänge kann so mit seinem mittigen Gestängeast auf einfache Weise zwischen parallelen Abschnitten des U-förmigen Gestänges angeordnet sein. Bei dem Gestänge in U-Form ist das jeweilige Gewicht dann vorteilhafterweise an dem, dem Absperrorgan entgegengesetzten Ende angeordnet, während bei dem T-förmigen Gestänge das Gewicht und das Absperrorgan an dem gleichen, pendelnden Ende des Gestänges, gebildet durch den mittigen Gestängerest, angeordnet sind.

Ein Ausführungsbeispiel der Erfindung, aus dem sich weitere erfinderische Merkmale ergeben können, ist in der Zeichnung dargestellt. Es zeigen:
- Figur 1:: eine perspektivische Darstellung eines Gehäuses der erfindungsgemäßen Vorrichtung;
- Figur 2:: eine perspektivische Ansicht einer erfindungsgemäßen Trennwand mit teilweise dargestelltem Gehäuse der erfindungsgemäßen Vorrichtung;
- Figur 3:: eine erste perspektivische Darstellung einer ersten Ausführung einer erfindungsgemäßen Trennwand mit einer Einlasseinrichtung und einer Auslasseinrichtung;
- Figur 4:: eine zweite perspektivische Darstellung der erfindungsgemäßen Trennwand mit der Einlasseinrichtung und der Auslasseinrichtung gemäß Figur 3;
- Figur 5:: eine erste perspektivische Darstellung einer zweiten Ausführung der erfindungsgemäßen Trennwand mit einer Einlasseinrichtung und einer Auslasseinrichtung; und
- Figur 6:: eine zweite perspektivische Darstellung der erfindungsgemäßen Trennwand mit der Einlasseinrichtung und der Auslasseinrichtung gemäß Figur 5.

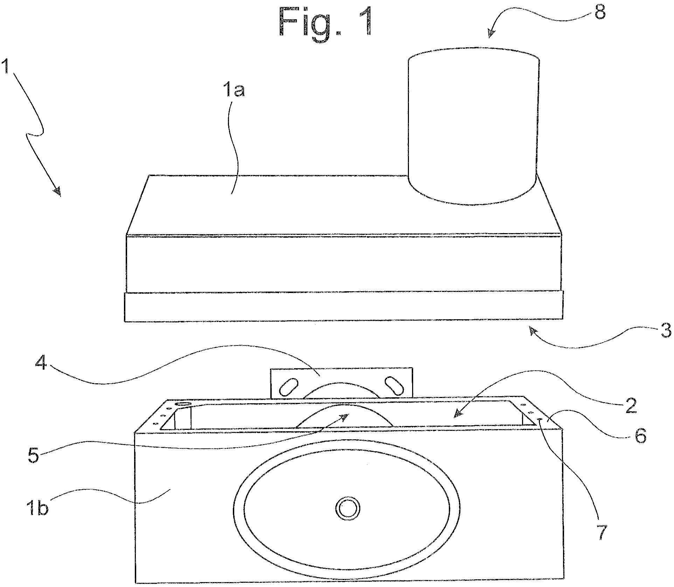

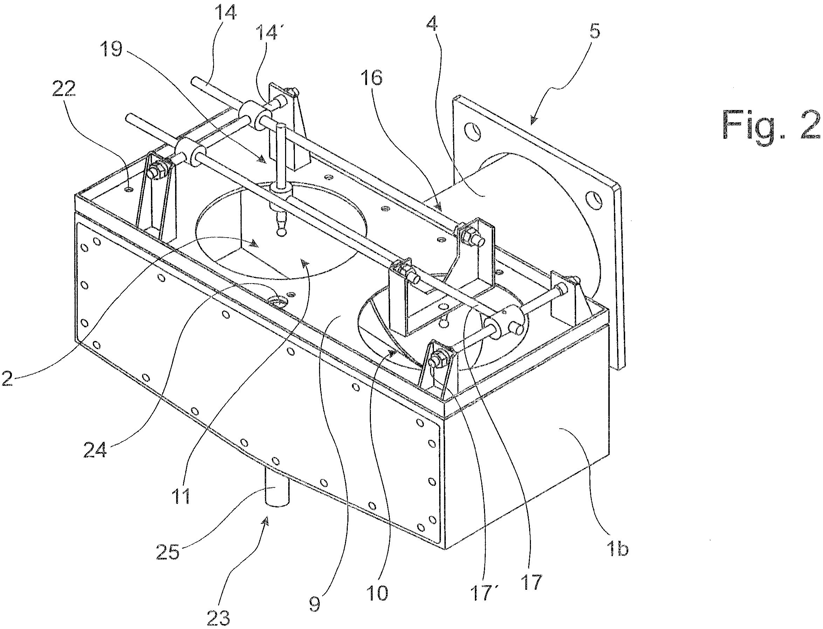

Figur 1 zeigt ein Gehäuse 1 der erfindungsgemäßen Vorrichtung bestehend aus einem Gehäuseoberteil 1a und einem Gehäuseunterteil 1b. Das Gehäuseoberteil 1a und das Gehäuseunterteil 1 b sind jeweils an deren in der Zeichnung einander zugewandt dargestellten offenen Seiten zusammensetzbar und umschließen zwei im Innern des Gehäuses 1 ausgebildete Kammern. Eine erste, druckseitige Kammer 2 ist im Innern des Gehäuses 1 von dem Gehäuseunterteil 1b und einer Trennwand 9 (gemäß Figur 2 bis Figur 6) umschlossen und eine zweite, umgebungsseitige Kammer 3 ist von dem Gehäuseoberteil 1a umschlossen. Das Gehäuseunterteil 1b weist einen Anschlussflansch 4 auf, mit dem die Vorrichtung über eine Anschlussöffnung 5 fluidleitend an ein geschlossenes System anschließbar ist. Weiter ist an dem Gehäuseunterteil 1b ein Anlagerand 6 mit Befestigungsdurchbrüchen 7 ausgebildet. Das Gehäuseoberteil 1a umfasst eine Atmosphärenöffnung 8, über die die zweite, umgebungsseitige Kammer 3 fluidleitend mit der Umgebung beziehungsweise der Atmosphäre verbunden ist.

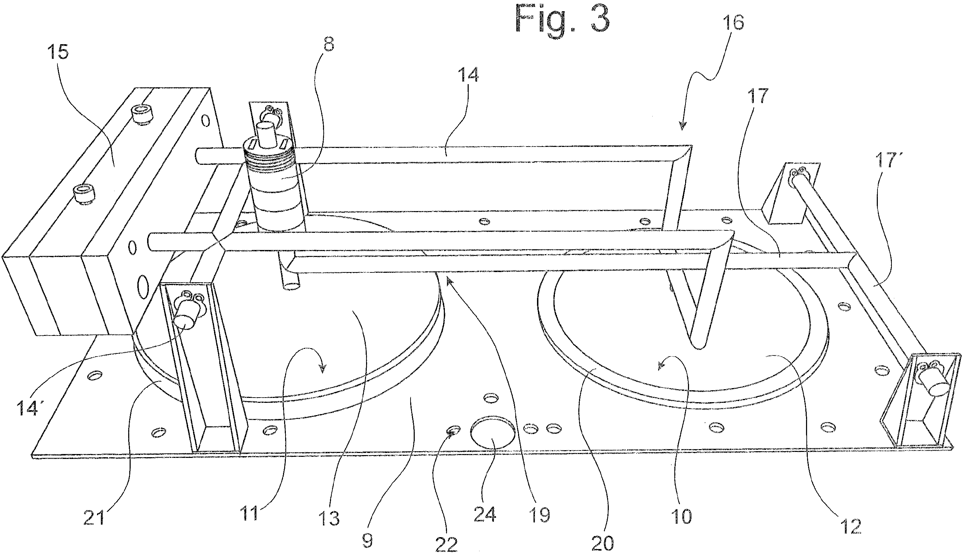

Eine fluiddichte Abtrennung der ersten Kammer 2 von der zweiten Kammer 3 erfolgt , wie in Figur 2 dargestellt durch eine Trennwand 9, die auf den Anlagerand 6 aufgesetzt und mit dem Gehäuseunterteil 1b fluiddicht verbunden ist. In Figur 2 ist dabei ein Kondensatablauf 23 zu erkennen, der durch eine Ausnehmung 24 in der Trennwand 9 und ein durch das Gehäuseunterteil 1b geführtes, zu der ersten Kammer 2 abgedichtetes Ablaufrohr 25 gebildet ist. Weiter ist in Figur 2 an der Trennwand 9 ein Stehrand 9' ausgebildet, an dem das Gehäuseoberteil 1a mit der restlichen Vorrichtung verbindbar ist, ohne in den durch die erste Kammer 2 gebildeten, druckseitigen Bereich eingreifen zu müssen. Auslasseinrichtung 19 und Einlasseinrichtung 16 sind in Figur 2 nur teilweise dargestellt und werden detailliert im Zusammenhang mit den Figuren 3 bis 6 beschrieben.

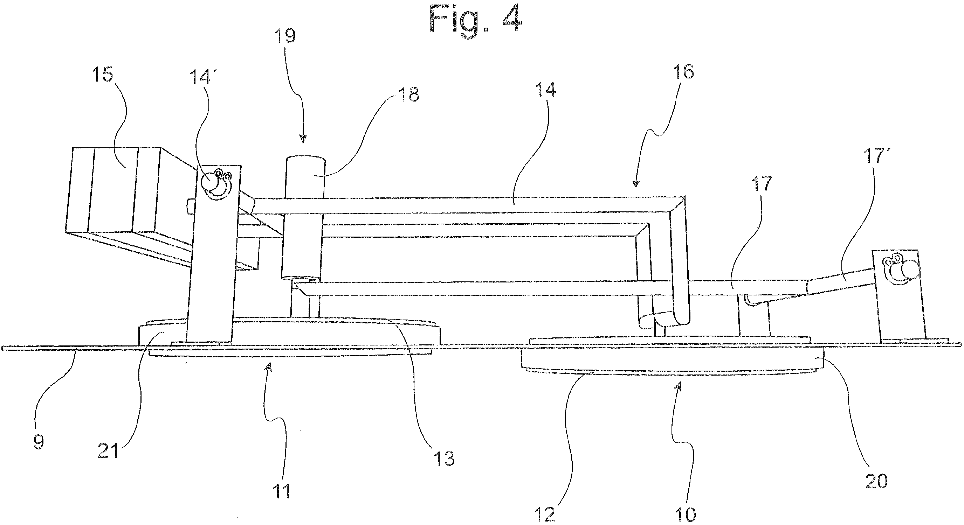

Eine erste Ausführung der erfindungsgemäßen Trennwand 9 mit der Einlasseinrichtung 16 und der Auslasseinrichtung 19 ist in der Figur 3 und Figur 4 dargestellt. In der Trennwand 9 sind zwei Durchlassöffnungen 10, 11 ausgebildet, die mit jeweils einem Absperrorgan 12, 13 verschließbar sind. Die Durchlassöffnung 10 und dass Absperrorgan 12 bilden zusammen mit einem Gestänge 14 und einen Gewicht 15 eine Einlasseinrichtung 16 aus. Das Gestänge 14 ist dabei an einer Drehachse 14' des Gestänges 14 drehgelenkig, pendelnd innerhalb der Vorrichtung gelagert, wobei das Gewicht 15 und das Absperrorgan 12 an einander entgegengesetzten pendelnden Enden des Gestänges 14 angeordnet sind.

Die Durchlassöffnung 11 und das Absperrorgan 13 bilden zusammen mit einem Gestänge 17 und einem Gewicht 18 eine Auslasseinrichtung 19. Das Gestänge 17 ist dabei ebenso wie das Gestänge 14 der Einlasseinrichtung 16 an einer Drehachse 17' des Gestänges 17 drehgelenkig, pendelnd innerhalb der Vorrichtung gelagert. Entgegen der Einlasseinrichtung 16 ist das Gewicht 18 der Auslasseinrichtung 19 jedoch am gleichen pendelnden Ende des Gestänges 17 wie das Absperrorgan 13 angeordnet.

Sowohl das Gewicht 15 als auch das Gewicht 18 ist jeweils auf einen Gewichtaufnahmeabschnitt des jeweiligen Gestänges 14, 17 aufgeschoben und austauschbar. Beide Gewichte 15 und 18 sind dabei derart zu dem jeweiligen Absperrorgan 12, 13 angeordnet, dass die Absperrorgane 12, 13 gegen in den Durchlassöffnungen 10, 11 angeordnete Dichtsitze 20, 21 gedrückt werden und die jeweilige Durchlassöffnung bei Atmosphärendruck und vorbestimmten Betriebsdrücken in ihrer Ausgangsposition verschließen. Der Einbau der Trennwand 9 mit der Einlasseinrichtung 16 und der Auslasseinrichtung 19 in die Vorrichtung erfolgt derart, dass sowohl das Gestänge 14 der Einlasseinrichtung 16 als auch das Gestänge 17 der Auslasseinrichtung 19 innerhalb der zweiten, umgebungsseitigen Kammer 3 angeordnet ist. Die Befestigung der Trennwand 9 an dem Gehäuseunterteil 1 b erfolgt durch Befestigungsdurchbrüche 22, die in der Trennwand 9 ausgebildet sind und bei an das Gehäuseunterteil 1 b angesetzter Trennwand 9 deckungsgleich zu den Befestigungsdurchbrüchen 7 des Anlagerandes 6 verteilt sind, so dass Trennwand 9 und Gehäuseunterteil 1b fluiddicht miteinander verschraubbar sind.

Aus Figur 4, die wie die Figur 3 die Trennwand 9 mit der Einlasseinrichtung 16 und der Auslasseinrichtung 19 zeigt, werden insbesondere die unterschiedlich in die Durchlassöffnungen 10, 11 eingesetzten Dichtsitze 20, 21 deutlich, in welchen die Absperrorgane 12, 13 in einer die Durchlassöffnungen 10, 11 verschließenden Stellung gehalten sind.

Während der Dichtsitz 20 unterhalb der Trennwand 9 in die erste, druckseitige Kammer hineinragend angeordnet ist, ist der Dichtsitz 21 oberhalb der Trennwand 9 maßgeblich Atmosphären beseitigt zu der Trennwand angeordnet.

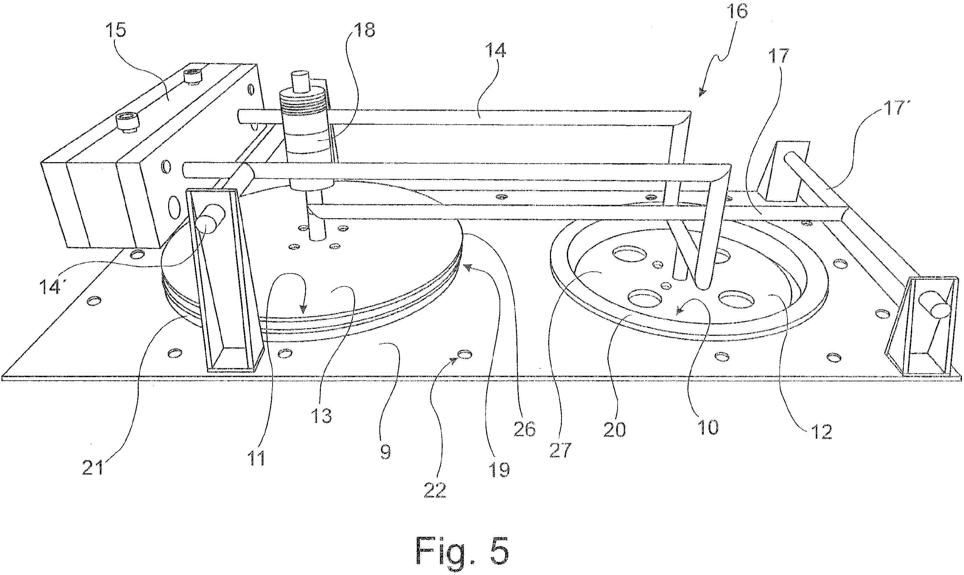

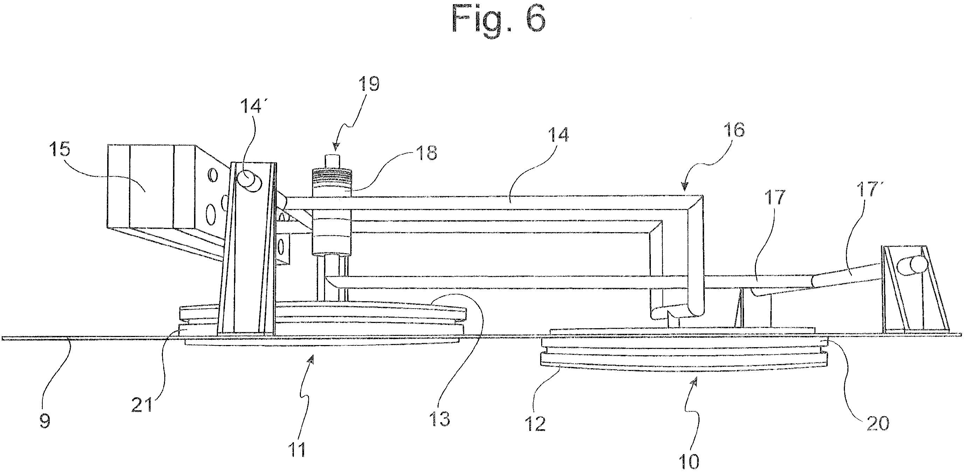

Figur 5 und Figur 6 zeigen eine zweite Ausführung der Absperrorgane 12', 13' und der Dichtsitze 20', 21'. Gleiche Teile sind dabei mit gleichen Bezugszeichen wie in den vorangegangenen Figuren gekennzeichnet. Die Absperrorgane 12', 13'unterscheiden sich dabei von der ersten Ausführung gemäß Figur 3 und Figur 4 dadurch, dass diese auf den jeweiligen Dichtsitzen 20', 21' flächig aufliegen und nicht in die Durchlassöffnungen 10, 11 oder Dichtsitze 20', 21' hineinragen beziehungsweise hinein geführt sind. Die Absperrorgane 12', 13' sind dabei in Sandwichbauweise zusammengesetzt, wobei wenigstens eine Lage 26 aus Fluorkautschukschaum mit einer Lage 27 eines steifen, formgebenden Materials eines der Absperrorgane 12', 13' ausbildet.

Bei Betrieb der Vorrichtung zur Druckregulierung, insbesondere zur Überdruck-und Unterdrucksicherung, verschließen die Absperrorgane 12, 13 unter normalen Betriebsbedingungen, das heißt unter vorbestimmten Betriebsdrücken die beiden Durchlassöffnungen 10, 11. Fällt jetzt der Betriebsdruck innerhalb eines geschlossenen Systems, dem die Vorrichtung zugeordnet ist, unter einen vorbestimmten Fluiddruck, wird die Durchlassöffnung 10 der Einlasseinrichtung 16 aufgrund des gegenüber dem Atmosphärendruck geringeren Fluiddrucks innerhalb des geschlossenen Systems freigegeben, indem das Absperrorgan 12 der Einlasseinrichtung 16 aufgrund des auf ihm lastenden Gewichtes in die erste, druckseitige Kammer 2 bewegt, bis ein vorgegebener Differenzdruck, von beispielsweise -1 mbar, zwischen dem geschlossenen System und der Atmosphäre erfolgt ist. Bei innerhalb des geschlossenen Systems über einen vorbestimmten Betriebsdruck steigenden Fluiddruck wird das Absperrorgan 13 der Auslasseinrichtung 19 in die zweite, umgebungsseitige Kammer 3 gedrückt, so dass Fluid aus dem geschlossenen System in die Atmosphäre entweichen kann, bis der Fluiddruck innerhalb des geschlossenen Systems soweit gefallen ist, dass das Absperrorgan 13 der Auslasseinrichtung 19 aufgrund dessen Gewichts in die, die Durchlassöffnung 11 verschließende Ausgangsposition, zurückgestellt ist. Dabei ist das Gewicht so eingestellt, dass das Verschließen bei einem vorgegebenen Differenzdruck von zum Beispiel +3,5 mbar erfolgt.

Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

## Patentansprüche

1. Vorrichtung zur Druckregulierung, insbesondere zur selbsttätigen Überdruck-und Unterdrucksicherung, eines geschlossenen Systems, insbesondere einer Biogasanlage, umfassend wenigstens eine erste, druckseitige Kammer (2), die wenigstens eine Anschlussöffnung (5) zu dem geschlossenen System aufweist, und eine zweite, umgebungsseitige Kammer (3) mit wenigstens einer Atmosphärenöffnung (8), welche aus der zweiten Kammer (3) nach außen führt,
**dadurch gekennzeichnet,**
**dass** die erste Kammer (2) und die zweite Kammer (3) über wenigstens eine Einlasseinrichtung (16) und wenigstens eine Auslasseinrichtung (19) miteinander verbunden sind, und
**dass** die Einlasseinrichtung (16) und die Auslasseinrichtung (19) jeweils wenigstens ein Absperrorgan (12, 13, 12', 13') aufweisen, mit dem jeweils wenigstens eine Durchlassöffnung (10, 11) der Einlasseinrichtung (16) und wenigstens eine Durchlassöffnung (10, 11) der Auslasseinrichtung (19) zwischen den Kammern (2, 3) verschließbar ist.

2. Vorrichtung nach Anspruch 1, **dadurch gekennzeichnet, dass** wenigstens eines der Absperrorgane (12, 13, 12', 13') gewichtsbelastet ist, insbesondere das die Absperrorgane (12, 13, 12', 13') von Einlasseinrichtung (16) und Auslasseinrichtung (19) gewichtsbelastet sind.

3. Vorrichtung nach einem der Ansprüche 1 oder 2, **dadurch gekennzeichnet, dass** der Einlasseinrichtung (16) oder der Auslasseinrichtung (19) zugeordnete Gewichte (15, 18) austauschbar sind.

4. Vorrichtung nach einem der Ansprüche 1 bis 3, **dadurch gekennzeichnet, dass** die Einlasseinrichtung (16) und die Auslasseinrichtung (19) jeweils wenigstens ein Gestänge (14, 17) aufweisen, an dem das jeweilige Absperrorgan (12, 13, 12', 13') gehalten ist.

5. Vorrichtung nach Anspruch 4, **dadurch gekennzeichnet, dass** die Gestänge (14, 17) drehgelenkig um eine Drehachse (14', 17') pendelnd in der Vorrichtung gelagert sind.

6. Vorrichtung nach einem der Ansprüche 4 oder 5, **dadurch gekennzeichnet, dass** die Absperrorgane (12, 13, 12', 13') jeweils an einem pendelnden Ende der Gestänge (14, 17) mit den jeweiligen Gestängen (14, 17) verbunden sind.

7. Vorrichtung nach einem der Ansprüche 4 bis 6, **dadurch gekennzeichnet, dass** die Absperrorgane (12, 13, 12', 13') kardanisch an dem jeweiligen Gestänge (14, 17) aufgehängt sind.

8. Vorrichtung nach einem der Ansprüche 4 bis 7, **dadurch gekennzeichnet, dass** die Gestänge (14, 17) mittig an die Absperrorgane (12, 13, 12', 13') angreifend mit diesen verbunden sind.

9. Vorrichtung nach einem der Ansprüche 4 bis 8, **dadurch gekennzeichnet, dass** die Kammern (2, 3) übereinander angeordnet sind und die Gestänge (14, 17) der Einlasseinrichtung (16) und der Auslasseinrichtung (19) oberhalb einer die Durchlassöffnungen (10, 11) aufweisenden Trennwand (9) zwischen den Kammern (2, 3) angeordnet sind.

10. Vorrichtung nach einem der Ansprüche 4 bis 9, **dadurch gekennzeichnet, dass** ein der Auslasseinrichtung (19) zugeordnetes Gewicht (18) an dem pendelnden Ende des Gestänges (17) mit dem Absperrorgan (13, 13') angeordnet ist.

11. Vorrichtung nach einem der Ansprüche 4 bis 10, **dadurch gekennzeichnet, dass** ein der Einlasseinrichtung (16) zugeordnetes Gewicht (15) an einem dem pendelnden Ende mit dem Absperrorgan (12, 12') gegenüberliegenden anderen pendelnden Ende des Gestänges (14) angeordnet ist.

12. Vorrichtung nach einem der Ansprüche 1 bis 11, **dadurch gekennzeichnet, dass** die erste, druckseitige Kammer (2) unterhalb der zweiten, umgebungsseitigen Kammer (3) angeordnet ist.

13. Vorrichtung nach einem der Ansprüche 1 bis 12, **dadurch gekennzeichnet, dass** der zweiten, umgebungsseitigen Kammer (3) ein Kondensatablauf (23) zugeordnet ist, der ein durch die erste, druckseitige Kammer (2) geführtes Ablaufrohr (25) umfasst.

14. Vorrichtung nach einem der Ansprüche 1 bis 13, **dadurch gekennzeichnet, dass** die Absperrorgane (12, 13) in den Durchlassöffnungen (10, 11) in Dichtsitzen (20, 21) geführt sind, die wenigstens einen Vorsprung aufweisen, der an seiner dem Absperrorgan (12, 13) zugewandten Seite einen Anlagebereich für das jeweilige Absperrorgan (12, 13) ausbildet.

15. Vorrichtung nach einem der Ansprüche 1 bis 13, **dadurch gekennzeichnet, dass** die Absperrorgane (12', 13') an in den Durchlassöffnungen (10, 11) angeordneten Dichtsitzen (20', 21') in Auflage bringbar sind.

16. Vorrichtung nach einem der Ansprüche 4 bis 15, **dadurch gekennzeichnet, dass** die Gestänge (14, 17) ineinandergreifend mit deren Schwenkradien der pendelnden Enden überlappend angeordnet sind.
